# EUROPÄISCHE PATENTSCHRIFT

(11) **EP 1 401 655 B1**
(45) Veröffentlichungstag und Bekanntmachung des Hinweises auf die Patenterteilung: **14.12.2005**
(21) Anmeldenummer: 02743138.6
(22) Anmeldetag: 31.05.2002
(51) Int. Cl.: B32B 27/18, F16C 33/20

(54) **GLEITLAGERVERBUNDWERKSTOFF MIT EINER METALLISCHEN STÜTZSCHICHT**
FRICTION BEARING COMPOSITE MATERIAL WITH A METAL BASE LAYER
MATIERE COMPOSITE POUR PALIER A GLISSEMENT, POSSEDANT UNE COUCHE D'APPUI METALLIQUE

(30) Priorität: 31.05.2001 DE 10126463
(43) Veröffentlichungstag der Anmeldung: 31.03.2004
(73) Patentinhaber: KS Gleitlager GmbH, 68789 St. Leon-Rot (DE)
(72) Erfinder: BICKLE, Wolfgang, 68799 Reilingen (DE); SCHUBERT, Werner, 69168 Wiesloch (DE); STORCH, Thomas, 68782 Brühl (DE)
(74) Vertreter: Friz, Oliver
(86) Internationale Anmeldenummer: PCT/EP2002/005993
(87) Internationale Veröffentlichungsnummer: WO 2002/096643

(56) Entgegenhaltungen:
- EP-A- 0 232 922
- EP-A- 0 234 602
- DE-A- 3 343 697
- DE-A- 4 105 657
- US-A- 5 750 221

## Beschreibung

Die Erfindung betrifft einen Gleitlagerverbundwerkstoff mit einer metallischen Stützschicht, einer darauf aufgebrachten porösen Trägerschicht und einer eine Gleitfläche für einen Gleitpartner bildenden auf PTFE-Basis beruhenden Gleitschicht, wobei das die Gleitschicht bildende Gleitschichtmaterial auch die Poren der Trägerschicht ausfüllt und wenigstens 60 Vol.-% PTFE und 10 - 25 Vol.-% Zinksulfid umfasst.

Ein derartiger Gleitlagerverbundwerkstoff ist beispielsweise aus EP 0 232 922 B1 bekannt. Zwar ist dort ein Mindestgehalt von 60 Vol.-% PTFE nicht erwähnt. Die Anmelderin fertigt jedoch seit langem einen Gleitlagerverbundwerkstoff bestehend aus 75 Vol.-% PTFE und 25 Vol.-% ZNS. In der genannten Patentschrift findet sich noch der Hinweis, dass als Füllstoffe zusätzlich 5 bis 40 Vol.-% Aramidfasern, Carbonfasern, Glasfasern enthalten sein können.

EP 0 708 892 B1 offenbart einen nicht gattungsgemäßen Gleitlagerverbundwerkstoff, dessen Gleitschichtmaterial PTFE und 2 bis 20 Vol.-% fibrillierter Aramidfasern umfasst. Die Ausführungsbeispiele umfassen neben PTFE noch PPS bzw. PFA bzw. Calciumfluorid in verschiedenen Anteilen. Weitere Hinweise lassen sich dieser Druckschrift nicht entnehmen.

WO 99/45285 offenbart einen nicht gattungsgemäßen Gleitlagerverbundwerkstoff, dessen Gleitschichtmaterial PTFE 10 bis 30 Vol.-% eines Metallfluorids, insbesondere Calciumfluorid, und 2 bis 10 % fibrillierte Aramidfasern sowie 2 bis 10 % eines schmelzbaren Fluorpolymers, FEP, PFA oder MFA, wobei FEP bevorzugt sei, umfassen soll. Konkret offenbart ist ein Ausführungsbeispiel mit 4 Vol.-% Aramidfasern, 7 Vol.-% FEP, 18 Vol.-% CaF, Rest PTFE.

WO 99/01675 offenbart einen Gleitlagerverbundwerkstoff, dessen Gleitschichtmaterial wenigstens 60 Vol.-% PTFE, 15 bis 25 Vol.-% eines metallischen Füllstoffs, vorzugsweise Blei, und insbesondere 8 bis 12 Vol.-% PVDF sowie 1 bis 3 Vol.-% in einer Vorzugsrichtung orientierte Kohlenstofffasern umfasst. Die Verwendung von metallischen Füllstoffen, insbesondere Blei, stößt jedoch zunehmend auf Ablehnung.

DE 693 27 377 T2 offenbart einen Gleitlagerverbundwerkstoff mit metallischer Stützschicht und poröser Trägerschicht und mit einer Gleitschicht, wobei das Gleitschichtmaterial als Hauptkomponente PTFE umfasst. Es ist ferner Zinkoxid-Whisker und Magnesiumoxysulfat vorgesehen, um die schlechte Verschleißbeständigkeit des PTFE zu verbessern. Nach einer Ausführungsvariante ist neben einer zur Auswahl stehenden Vielzahl weiterer Komponenten Zinksulfid erwähnt.

DE 33 43 697 A1 offenbart ebenfalls einen Gleitlagerverbundwerkstoff mit Stützschicht und Trägerschicht sowie einer Gleitschicht, deren Gleitschichtmaterial ein Gemisch aus den folgenden Komponenten aufweist: 0,1 bis 50 Vol.-% von mindestens einer Masse aus der Gruppe feste Schmiermittel, wie metallische Schmiermittel mit niedrigem Schmelzpunkt, wie Pb, Sn oder ihre Legierungen, Metalloxide, Metallsulfide, Metallfluoride, Graphit oder dergleichen, faserförmige Materialien, wie Kohlenstofffasern, und Keramika, wie SiC; und im Rest im wesentlichen PTFE, wobei die Gesamtmenge der Gehalte der Massen, ausgenommen PTFE, im Bereich von 0,2 bis 70 Vol.-% liegt.

EP 0 232 922 B1 offenbart eine Gleitlagerverbundwerkstoff mit 60 Vol.-% PTFE, 20 Vol.-% Glasfasern und 20 Vol.-% ZnS. In der Druckschrift ist ferner darauf hingewiesen, dass ein polymerer Matrixwerkstoff Glasfasern, Glaskugeln, Kohlefasern, Keramikfasern und Aramidfasern einzeln oder zu mehreren in einer Menge von 5 bis 40 Vol.-%, vorzugsweise 10 bis 25 Vol.-% enthalten kann.

EP 0 632 208 B1 offenbart ebenfalls einen Gleitlagerverbundwerkstoff mit Stützschicht, Trägerschicht und Gleitschicht, wobei das Gleitschichtmaterial aus PTFE, 50 bis 30 Vol.-% metallischen Füllstoff und 5 bis 40 Vol.-% PVDF besteht. Als metallischer Füllstoff ist Blei oder Zinksulfid erwähnt. Eine konkrete Zusammensetzung umfasst 70 Vol.-% PTFE, 10 Vol.-% PVDF und 20 Vol.-% Blei.

Hiervon ausgehend liegt der vorliegenden Erfindung die Aufgabe zugrunde, einen Gleitlagerverbundwerkstoff der eingangs genannten Art zu schaffen, der einen hohen Verschleißwiderstand und einen dennoch geringen Reibwert aufweist.

Diese Aufgabe wird bei einem gattungsgemäßen Gleitlagerverbundwerkstoff erfindungsgemäß dadurch gelöst, dass das Gleitschichtmaterial desweiteren 1,5 - 3,5 Vol.-% Carbon-Fasern und 1 - 7 Vol.-% PFA aufweist.

Die Erhöhung des Verschleißwiderstands einerseits und die Beibehaltung eines geringen Reibwerts und damit die Erreichung von tribologisch geeigneten Eigenschaften sind in der Praxis gegenläufig zu erreichende Ziele. Beispielsweise hat ein Gleitlagerverbundwerkstoff allein auf PTFE-Basis einen hervorragenden Reibwert, der Verschleißwiderstand ist jedoch nicht zufriedenstellend und kann durch Zugabe von Füllstoffen, beispielsweise metallische Füllstoffe verbessert werden. Durch metallische Füllstoffe wird nämlich die Wärmeabführung verbessert und dadurch die Betriebstemperaturen geringer gehalten, was einen höheren Veschleißwiderstand bedeutet.

Des weiteren ist es - wie eingangs erwähnt - beispielsweise bekannt, zur Erhöhung des Reibwerts faserige Füllstoffe, insbesondere Carbon-Fasern zuzusetzen. Wenn jedoch der Carbon-Faseranteil hoch ist, insbesondere 4 Vol.-% und mehr beträgt, so wird hierdurch zwar der Verschleißwiderstand erhöht, der Reibwert wird aber stark beeinträchtigt. Ferner bringt die Zugabe von faserigen Füllstoffen das Problem mit sich, dass die Fasern nicht ohne weiteres in dem Gleitschichtmaterial gehalten oder verankert werden können und potentielle Ermüdungsstellen darstellen. Deshalb wurde mit der eingangs erwähnten WO 99/45285 der Vorschlag unterbreitet, sogenannte "fibrillierte" Aramidfasern einzusetzen, die aufgrund ihrer sehr stark vergrößerten Oberfläche eine bessere Einbindung in dem Gleitschichtmaterial erfahren.

Mit der vorliegenden Erfindung wurde erkannt, dass optimale Ergebnisse dann erzielt werden, wenn der Carbonfaseranteil höchstens 3,5 Vol.-% beträgt und wenn zusätzlich 1 bis 7 Vol.-% PFA in dem Gleitschichtmaterial enthalten sind. Es wurde festgestellt, dass gerade PFA die Bindung von Carbon-Fasern in dem Matrix bildenden PTFE-Basismaterial der Gleitschicht verbessert. Es wurde erfindungsgemäß ein Gleitschichtmaterial geschaffen, welches trotz des nicht allzu hohen Carbon-Faseranteils von höchstens 3,5 Vol.-%, insbesondere 1,5 bis 3,5 Vol.-%, einen zufriedenstellenden Verschleißwiderstand mit hervorragender Einbindung der Carbon-Fasern in das Gleitschichtmaterial aufweist. Dies wird auf die Zugabe von PFA im angegebenen Mengenbereich zurückgeführt. Aufgrund des (eher geringen) Carbon-Faseranteils ist der Reibwert des erfindungsgemäßen Gleitschichtmaterials verbessert.

Nach einer bevorzugten Ausführungsform der Erfindung umfaßt das Gleitschichtmaterial 65 bis 85 Vol.-% PTFE, insbesondere 70 bis 77 Vol.-% PTFE.

Nach einer weiteren Ausführungsform der Erfindung beträgt der Zinksulfid-Anteil 15 bis 20 Vol.-%.

Vorteilhafterweise ist die mittlere Korngröße der verwendeten Zinksulfid-Partikel, gemessen im Zentrifugenverfahren nach DIN ISO 9001, kleiner als 1 µm, vorzugsweise liegt sie zwischen 0,2 und 0,5 µm. Es wurde festgestellt, dass die Zugabe von Zinksulfid die Vereinzelung und damit die homogene Vermischung der Carbon-Fasern mit den weiteren Komponenten unterstützt. Man erkennt unter dem Mikroskop, dass sich die feinen Zinksulfid-Partikel quasi benetzend an die Oberfläche der Carbon-Fasern anlagern bzw. dort anhaften. Ferner erkennt man, dass durch das Zinksulfid, insbesondere bei feiner Körnung der Zinksulfid-Partikel, auch eine Anhaftung von PFA-Partikeln an der Oberfläche der Carbonfasern begünstigt wird. Hierdurch wird die Einbindung und Fixierung der Carbon-Fasern im Matrixverbund verbessert. Es zeigt sich auch, dass bei Verwendung feinkörniger Zinksulfidpartikel die Quellneigung des Verbundwerkstoffs im Betrieb verringert ist.

In weiterer Ausbildung der Erfindung wird vorgeschlagen, dass der Anteil des PFA 3 bis 7 Vol.-% beträgt.

Optimale Eigenschaften des Gleitschichtmaterials im Hinblick auf einen möglichst hohen Verschleißwiderstand und einen dabei dennoch guten Reibwert werden mit einem Carbon-Faseranteil von 2,5 bis 3,5 Vol.-% erreicht.

Es werden vorzugsweise Carbon-Fasern einer Dicke von 10 - 20 µm, insbesondere von 10-16 µm und besonders bevorzugtermaßen von 12 - 16 µm eingesetzt. Die Länge der Caron-Fasern beträgt insbesondere 100 - 250 µm, vorzugsweise 100 - 200 µm und besonders bevorzugtermaßen 100 - 160 µm. Wenn die Fasern zu lang sind, so bereitet es Schwierigkeiten, die Fasern in die Poren der Trägerschicht einzubringen. Wenn die Fasern zu kurz sind, so tragen sie nicht zur Tragfestigkeit bei und lassen sich schlechter im Matrixmaterial verankern.

Des weiteren wurde festgestellt, dass die zusätzliche Zugabe von 3 bis 7 Vol.-%, insbesondere 4 bis 6 Vol.-% PPSO₂ die Einbindung der Carbon-Fasern in das PTFE-Basismaterial weiter verbessert.

Weitere Merkmale, Einzelheiten und Vorteile der Erfindung ergeben sich aus den Patentansprüchen und aus der nachfolgenden Beschreibung und zeichnerischen Darstellung einer bevorzugten Ausführungsform des erfindungsgemäßen Gleitlagerverbundwerkstoffs.

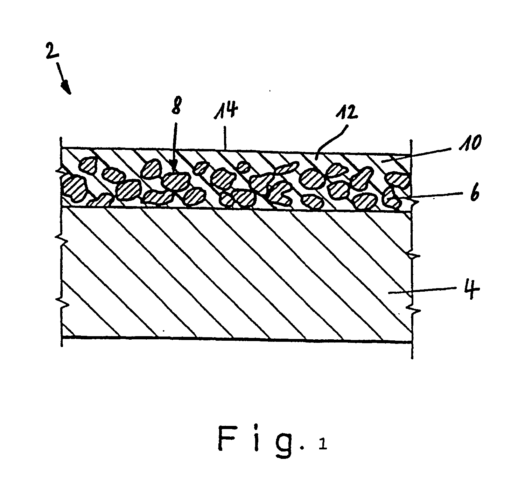

Die Figur zeigt einen insgesamt mit dem Bezugszeichen 2 bezeichneten Gleitlagerverbundwerkstoff mit einer metallischen Stützschicht 4 aus Stahl und einer darauf aufgebrachten porösen Trägerschicht 6, vorzugsweise aus einer bleifreien Bronzeschicht, beispielsweise mit 90 Gew.-% Kupfer und 10 Gew.-% Zinn. In die der Stützschicht 4 gegenüberliegende Oberseite 8 der Trägerschicht 6 ist ein Gleitschichtmaterial 10 in die Poren der Trägerschicht 6 eingebracht. Das Gleitschichtmaterial 10 steht geringfügig über die Oberseite 8 der Trägerschicht 6 vor und bildet eine Gleitschicht 12 mit einer Gleitfläche 14 für einen nicht dargestellten Gleitpartner. Das Gleitschichtmaterial 10 weist eine PTFE-Matrix mit wenigstens 60 Vol.-% PTFE und 10 bis 25 Vol.-% Zinksulfid und erfindungsgemäß 1,5 bis 3,5 Vol.-% Carbon-Fasern und 1 bis 7 Vol.-% PFA auf.

Eine bevorzugte Zusammensetzung des Gleitschichtmaterials umfasst 65 bis 85 Vol.-% Matrix bildendes PTFE, 10 bis 25 Vol.-% ZnS, 3 bis 7 Vol.-% PFA und 1,5 bis 3,5 Vol.-% Carbon-Fasern. Das Gleitschichtmaterial besteht vorzugsweise aus den vorstehend genannten Komponenten. Eine bevorzugte beispielhafte Zusammensetzung beträgt 74 Vol.-% PTFE, 18 Vol.-% ZnS, 5 Vol.-% PFA und 3 Vol.-% Carbon-Fasern.

Eine weitere bevorzugte Zusammensetzung des Gleitschichtmaterials umfasst 60 bis 80 Vol.-% PTFE, 10 bis 25 Vol.-% ZnS, 3 bis 7 Vol.-% PFA, 1,5 bis 3,5 Vol.-% Carbon-Fasern und 3 bis 7 Vol.-% PPSO₂ umfaßt. Das Gleitschichtmaterial besteht vorzugsweise aus den vorstehend genannten Komponenten. Eine bevorzugte beispielhafte Zusammensetzung beträgt 69 Vol.-% Matrix bildendes PTFE, 18 Vol.-% ZnS, 5 Vol.-% PFA, 3 Vol.-% Carbon-Fasern und 5 Vol.-% PPSO₂.

## Patentansprüche

1. Gleitlagerverbundwerkstoff (2) mit einer metallischen Stützschicht (4), einer darauf aufgebrachten porösen Trägerschicht (6) und einer eine Gleitfläche (14) für einen Gleitpartner bildenden auf PTFE-Basis beruhenden Gleitschicht (12), wobei das die Gleitschicht (12) bildende Gleitschichtmaterial (10) auch die Poren der Trägerschicht (6) ausfüllt und wenigstens 60 Vol.-% PTFE und 10 - 25 Vol.-% Zinksulfid umfasst,
**dadurch gekennzeichnet,**
**dass** das Gleitschichtmaterial (10) desweiteren 1,5 - 3,5 Vol.-% Carbon-Fasern und 1 - 7 Vol.-% PFA aufweist.

2. Gleitlagerverbundwerkstoff nach Anspruch 1, **dadurch gekennzeichnet, dass** das Gleitschichtmaterial (10) 65 - 85 Vol.-% PTFE umfasst.

3. Gleitlagerverbundwerkstoff nach Anspruch 2, **dadurch gekennzeichnet, dass** das Gleitschichtmaterial (10) 70 - 77 Vol.-% PTFE umfasst.

4. Gleitlagerverbundwerkstoff nach Anspruch 1, 2 oder 3, **dadurch gekennzeichnet, dass** das Gleitschichtmaterial (10) 15 - 20 Vol.-% Zinksulfid umfasst.

5. Gleitlagerverbundwerkstoff nach einem oder mehreren der vorstehenden Ansprüche, **dadurch gekennzeichnet, dass** Zinksulfid-Partikel einer mittleren Korngröße von < 1 µm enthalten sind.

6. Gleitlagerverbundwerkstoff nach Anspruch 5, **dadurch gekennzeichnet, dass** Zinksulfid-Partikel einer mittleren Korngröße von 0,2 - 0,5 µm enthalten sind.

7. Gleitlagerverbundwerkstoff nach einem oder mehreren der vorstehenden Ansprüche, **dadurch gekennzeichnet, dass** das Gleitschichtmaterial (10) 3 - 7 Vol.-% PFA umfasst.

8. Gleitlagerverbundwerkstoff nach einem oder mehreren der vorstehenden Ansprüche, **dadurch gekennzeichnet, dass** das Gleitschichtmaterial (10) 2,5 bis 3,5 Vol.-% Carbon-Fasern umfasst.

9. Gleitlagerverbundwerkstoff nach einem oder mehreren der vorstehenden Ansprüche, **dadurch gekennzeichnet, dass** das Gleitschichtmaterial (10) desweiteren 3 - 7 Vol.-% PPSO₂ umfasst.

10. Gleitlagerverbundwerkstoff nach Anspruch 9, **dadurch gekennzeichnet, dass** das Gleitschichtmaterial (10) 4 - 6 Vol.-% PPSO₂ umfasst.

11. Gleitlagerverbundwerkstoff nach einem oder mehreren der vorstehenden Ansprüche, **dadurch gekennzeichnet, dass** die Dicke der Carbon-Fasern 10 - 20 µm, insbesondere 10 - 16 µm beträgt.

12. Gleitlagerverbundwerkstoff nach einem oder mehreren der vorstehenden Ansprüche, **dadurch gekennzeichnet, dass** die Länge der Carbon-Fasern 100 - 250 µm, insbesondere 100 - 200 µm, insbesondere 100 - 160 µm beträgt.

## Claims

1. Sliding bearing composite material (2) with a metallic support layer (4), a porous carrier layer (6) disposed thereon, and a PTFE-based sliding layer (12) which forms a sliding surface (14) for a sliding partner, wherein the sliding layer material (10) forming the sliding layer (12) also fills the pores of the carrier layer (6) and comprises at least 60 % by volume of PTFE and 10 to 25 % by volume of zinc sulphide, **characterised in that** the sliding layer material (10) also has 1.5 to 3.5 % by volume of carbon fibres and 1 to 7 % by volume of PFA.

2. Sliding bearing composite material according to claim 1, **characterised in that** the sliding layer material (10) comprises 65 to 85 % by volume of PTFE.

3. Sliding bearing composite material according to claim 2, **characterised in that** the sliding layer material (10) comprises 70 to 77 % by volume of PTFE.

4. Sliding bearing composite material according to claim 1, claim 2 or claim 3, **characterised in that** the sliding layer material (10) comprises 15 to 20 % by volume of zinc sulphide.

5. Sliding bearing composite material according to one or more of the preceding claims, **characterised in that** it contains zinc sulphide particles of an average grain size of <1 µm.

6. Sliding bearing composite material according to claim 5, **characterised in that** it contains zinc sulphide particles of an average grain size of 0.2 to 0.5 µm.

7. Sliding bearing composite material according to one or more of the preceding claims, **characterised in that** the sliding layer material (10) comprises 3 to 7 % by volume of PFA.

8. Sliding bearing composite material according to one or more of the preceding claims, **characterised in that** the sliding layer material (10) comprises 2.5 to 3.5 % by volume of carbon fibres.

9. Sliding bearing composite material according to one or more of the preceding claims, **characterised in that** the sliding layer material (10) also comprises 3 to 7 % by volume of PPSO₂.

10. Sliding bearing composite material according to claim 9, **characterised in that** the sliding layer material (10) comprises 4 to 6 % by volume of PPSO₂.

11. Sliding bearing composite material according to one or more of the preceding claims, **characterised in that** the thickness of the carbon fibres is 10 to 20 µm, in particular 10 to 16 µm.

12. Sliding bearing composite material according to one or more of the preceding claims, **characterised in that** the length of the carbon fibres is 100 to 250 µm, in particular 100 to 200 µm, particularly 100 to 160 µm.

## Revendications

1. Matériau composite pour palier lisse (2) avec une couche d'appui métallique (4), une couche support poreuse (6) rapportée sur ladite couche d'appui et une couche de glissement (12) à base de PTFE formant une surface de glissement (14) pour un élément glissant antagoniste, le matériau (10) constitutif de la couche de glissement (12) remplissant également les pores de la couche support (6) et comprenant au moins 60 % en volume de PTFE et 10 à 25 % en volume de sulfure de zinc,
**caractérisé en ce que**
le matériau de la couche de glissement (10) contient en outre 1,5 à 3,5 % en volume de fibres de carbone et 1 à 7 % en volume de PFA.

2. Matériau composite pour palier lisse selon la revendication 1, **caractérisé en ce que** le matériau de la couche de glissement (10) contient 65 à 85 % en volume de PTFE.

3. Matériau composite pour palier lisse selon la revendication 2, **caractérisé en ce que** le matériau de la couche de glissement (10) contient 70 à 77 % en volume de PTFE.

4. Matériau composite pour palier lisse selon la revendication 1, 2 ou 3, **caractérisé en ce que** le matériau de la couche de glissement (10) contient 15 à 20 % en volume de sulfure de zinc.

5. Matériau composite pour palier lisse selon l'une au moins des revendications précédentes, **caractérisé en ce qu'**il contient des particules de sulfure de zinc de taille moyenne inférieure à 1 µm.

6. Matériau composite pour palier lisse selon la revendication 5, **caractérisé en ce qu'**il contient des particules de sulfure de zinc de taille moyenne comprise entre 0,2 et 0,5 µm.

7. Matériau composite pour palier lisse selon l'une au moins des revendications précédentes, **caractérisé en ce que** le matériau de la couche de glissement (10) contient 3 à 7 % en volume de PFA.

8. Matériau composite pour palier lisse selon l'une au moins des revendications précédentes, **caractérisé en ce que** le matériau de la couche de glissement (10) contient 2,5 à 3,5 % en volume de fibres de carbone.

9. Matériau composite pour palier lisse selon l'une au moins des revendications précédentes, **caractérisé en ce que** le matériau de la couche de glissement (10) contient également 3 à 7 % en volume de PPSO₂.

10. Matériau composite pour palier lisse selon la revendication 9, **caractérisé en ce que** le matériau de la couche de glissement (10) contient 4 à 6 % en volume de PPSO₂.

11. Matériau composite pour palier lisse selon l'une au moins des revendications précédentes, **caractérisé en ce que** l'épaisseur des fibres de carbone est comprise entre 10 et 20 µm, en particulier entre 10 et 16 µm.

12. Matériau composite pour palier lisse selon l'une au moins des revendications précédentes, **caractérisé en ce que** la longueur des fibres de carbone est comprise entre 100 et 250 µm, en particulier entre 100 et 200 µm, notamment entre 100 et 160 µm.
